# EUROPÄISCHE PATENTSCHRIFT

(11) **EP 0 654 812 B1**
(45) Veröffentlichungstag und Bekanntmachung des Hinweises auf die Patenterteilung: **26.02.1997**
(21) Anmeldenummer: 94203318.4
(22) Anmeldetag: 15.11.1994
(51) Int. Cl.: H01J 35/10

(54) **Drehanoden-Röntgenröhre mit einem Gleitlager**
Rotating anode x-ray tube with slide bearing
Tube à rayons X à anode tournante avec palier à glissement

(30) Priorität: 23.11.1993 DE 4339817
(43) Veröffentlichungstag der Anmeldung: 24.05.1995
(73) Patentinhaber: Philips Patentverwaltung GmbH, 22335 Hamburg (DE); PHILIPS ELECTRONICS N.V., 5621 BA Eindhoven (NL)
(72) Erfinder: Vetter, Axel, c/o PHILIPS PATENTVERWALTUNG GMBH, D-20097 Hamburg (DE)
(74) Vertreter: Hartmann, Heinrich, Dipl.-Ing.

(56) Entgegenhaltungen:
- EP-A- 0 378 273
- US-A- 4 096 924

## Beschreibung

Die Erfindung betrifft eine Drehanoden-Röntgenröhre mit einem Gleitlager, insbesondere einem Spiralrillenlager, zur Lagerung der Drehanode, das einen feststehenden und einen drehbaren Lagerteil umfaßt, wobei zwischen den beiden Lagerteilen ein flüssiges Schmiermittel vorgesehen ist, und wenigstens einer der beiden Lagerteile zumindest einen Schmiermittelkanal mit Kapillarwirkung umfaßt.

Eine solche Drehanoden-Röntgenröhre ist aus der EP-A 378 273 bekannt. Die Schmiermittelkanäle müssen dabei Kapillarwirkung haben, damit die Kapillarkräfte das Schmiermittel nicht in den Vakuumraum der Röntgenröhre abfließen lassen, und zwar auch dann nicht, wenn die Drehanode rotiert. Die Kapillarwirkung hängt von der Länge und dem Durchmesser des Schmiermittelkanals ab. Wenn als Schmiermittel eine Galliumlegierung verwendet wird, ergibt sich bei einem Durchmesser des Schmiermittelkanals von 0,5 mm eine kapillare Steighöhe von maximal 45 mm. Bei längeren Schmiermittelkanälen muß der Durchmesser des Kanals noch Kleiner sein. Bohrungen mit einem derart geringen Durchmesser sind bei der angegebenen Länge allenfalls mit großem Aufwand zu realisieren.

Aufgabe der vorliegenden Erfindung ist es, bei einer Drehanoden-Röntgenröhre der eingangs genannten Art die Herstellung langer Schmiermittelkanäle zu vereinfachen. Diese Aufgabe wird erfindungsgemäß dadurch gelöst, daß der Schmiermittelkanal einen größeren Querschnitt hat als zur Erzielung einer Kapillarwirkung zulässig und daß in dem Schmiermittel ein vom Schmiermittel benetzbarer Körper angeordnet ist, der sich zumindest über einen Teil der Länge des Schmiermittelkanals erstreckt und der den freien Querschnitt im Schmiermittelkanal soweit verringert, daß sich eine Kapillarwirkung ergibt.

Bei der Erfindung wird also zunächst eine Bohrung hergestellt, deren Durchmesser größer ist als zur Erzielung der Kapillarwirkung zulässig;
beispielsweise kann der Durchmesser der Bohrung bei einem Schmiermittelkanal mit einer Länge von 50 mm oder mehr 1 mm betragen. Eine solche Bohrung ist relativ leicht herstellbar - z.B. durch Funkenerodieren - zeigt aber keine Kapillarwirkung. Diese wird dadurch erreicht, daß in dem durch die Bohrung gebildeten Schmiermittelkanal ein vom Schmiermittel benetzbarer Körper angeordnet ist, der den freien Querschnitt im Schmiermittelkanal soweit verringert, daß sich eine Kapillarwirkung ergibt.

Nach einer bevorzugten Weiterbildung ist vorgesehen, daß in dem Schmiermittelkanal ein Draht angeordnet ist, dessen Außenquerschnitt kleiner ist als der Innenquerschnitt des Schmiermittelkanals. Durch einen Draht mit einem Außendurchmesser von 1 mm, der in einem Schmiermittelkanal von 1,1 mm Innendurchmesser angeordnet ist, ergibt sich somit ein Schmiermittelkanal, der eine vergleichbare Kapillarwirkung hat, wie eine 0,1 mm Bohrung.

Eine besonders einfach Befestigung des Drahtes in dem Schmiermittelkanal ergibt sich nach einer Weiterbildung der Erfindung dadurch, daß der Draht an einer Stelle - vorzugsweise am Ende - so geformt ist, daß er im Schmiermittelkanal klemmt.

Eine andere Weiterbildung der Erfindung sieht vor, daß in dem Schmiermittelkanal ein offenporiger Körper angeordnet ist.

Hier kann durch den Körper der gesamte Querschnitt des Kanals ausgefüllt werden. Da der Körper jedoch offenporig und porös ist, ergibt sich die Kapillarwirkung durch die poröse Struktur des Körpers.

Die Erfindung wird nachstehend anhand der Zeichnung näher erläutert. Es zeigen
Fig. 1 eine Drehanoden-Röntgenröhre, bei der die Erfindung anwendbar ist,
Fig. 2 einen erste Ausführungsform eines Schmiermittelkanals und
Fig. 3 eine weitere Ausführungsform.

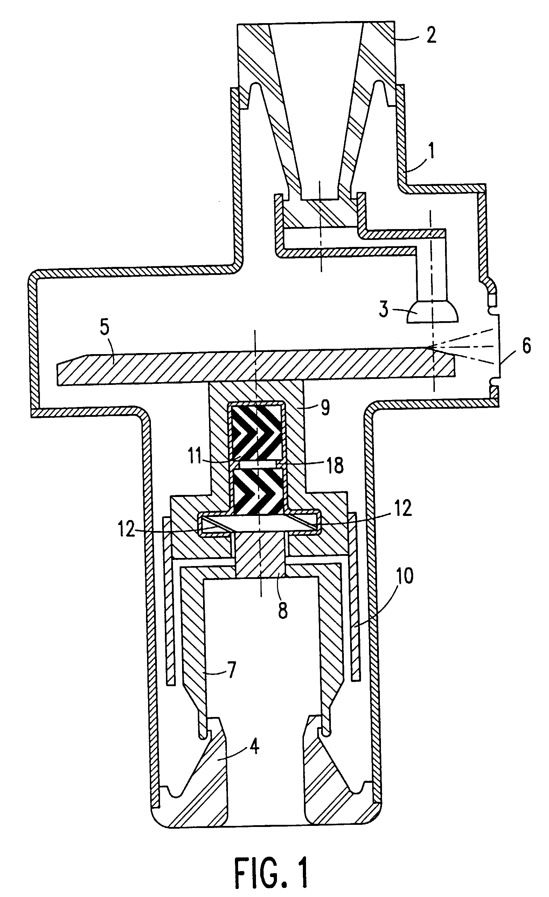

Die in Fig. 1 dargestellte Drehanoden-Röntgenröhre besitzt einen Metallkolben 1, an dem gegenüber einem ersten Isolator 2 die Kathode 3 und über einen zweiten Isolator 4 die Drehanode befestigt ist. Die Drehanode umfaßt eine Anodenscheibe 5, auf deren der Kathode gegenüberliegenden Fläche beim Einschalten einer Hochspannung Röntgenstrahlung erzeugt wird. Diese tritt durch ein vorzugsweise aus Beryllium bestehendes Strahlenaustrittsfenster 6 im Kolben aus. Die Anodenscheibe 5 ist über einem Gleitlager mit einem Trägerkörper 7 verbunden, der an dem zweiten Isolator 4 befestigt ist. Das Lager umfaßt einen mit dem Trägerkörper 7 fest verbundenen rotationssymmetrischen Lagerteil 8, der von einem mit der Anodenscheibe 5 verbundenen drehbaren Lagerteil 9 umschlossen wird, wobei der feststehende Lagerteil auf seiner Außenfläche mit einem fischgrätartigen Rillenmuster 11 (Spiralrillen) versehen ist. Ein derartiges Muster befindet sich nur auf den Mantelfläche des festen Lagerteils 8, sonder auf - in der Zeichnung nicht erkennbar - auf dessen Stirnflächen.

In dem festen Lagerteil sind Schmiermittelkanäle 12 vorgesehen, deren Zweck in der EP-A 378 273 näher erläutert wird, worauf ausdrücklich bezug genommen wird. Weitere in der Zeichnung nicht näher dargestellte Schmiermittelkanäle können vorgesehen sein, beispielsweise ein Schmiermittelkanal, der den Bereich 18 in der Mitte zwischen den zur Aufnahme der radialen Lagerkräfte dienenden Hälften des Spiralrillenlagers 11 mit einer der Stirnflächen des festen Lagerteiles verbindet.

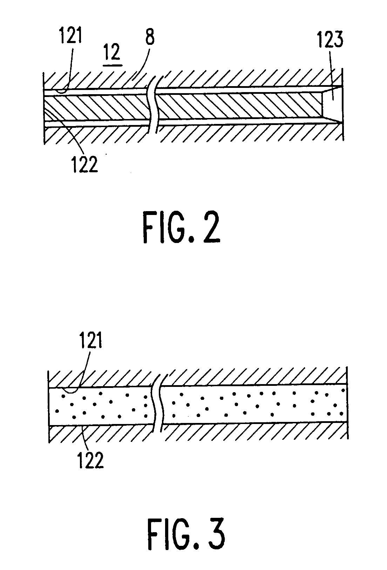

Fig. 2 zeigt einen solchen Schmiermittelkanal in vergrößerter Darstellung. Der Schmiermittelkanal wird durch eine Bohrung 121 mit einem Durchmesser von z.B. 1,1 mm in dem feststehenden Lagerteil 8 gebildet und durch einen darin angeordneten Körper in Form eines Drahtes 122 mit einem Außendurchmesser von z.B. 1 mm. Der zwischen dem Draht 122 und der Innenwand der Bohrung 121 freibleibende Zwischenraum hat eine Kapillarwirkung, die einer Bohrung mit einem Durchmesser von 0,1 mm entspricht. Damit sich die Kapillarwirkung ergibt, muß der Draht von dem Schmiermittel benetzbar sein. Zu diesem Zweck kann der Draht und die Innenfläche der Bohrung aus dem gleichen Material bestehen wie die Lagerteile 8 oder 9; für eine als Schmiermittel dienende Galliumlegierung eignet sich beispielsweise ein Draht aus Wolfram oder Molybdän, dessen Oberfläche vorzugsweise versilbert ist, um eine Oxidation zu verhindern und eine noch bessere Benetzbarkeit zu erreichen.

An seinem einen Ende 123 ist der Draht 122 angeflacht, d.h. durch Zusammenquetschen so verformt, daß er in der Bohrung 121 Klemmt und damit fixiert ist. Er kann sich deshalb nicht in axialer Richtung in der Bohrung bewegen, und mit der relativ zu ihm rotierenden Lagerfläche in Berührung kommen. Die Kapillarwirkung bleibt erhalten.

In Fig. 3 ist eine zweite Ausführungsform eines Schmiermittelkanals dargestellt. In diesem Fall enthält der Schmiermittelkanal in der Bohrung 121 einen offenporigen Körper 122, dessen offene Poren untereinander in Verbindung stehen und so für eine Kapillarwirkung sorgen. Der Körper 122 muß aus einem von dem Schmiermittel benetzbaren Material bestehen, z.B. aus grob gesintertem Molybdän oder Wolfram.

## Patentansprüche

1. Drehanoden-Röntgenröhre mit einem Gleitlager, insbesondere einem Spiralrillenlager, Lagerung der Drehanode, das einen feststehenden (8) und einen drehbaren (9) Lagerteil umfaßt, wobei zwischen den beiden Lagerteilen ein flüssiges Schmiermittel vorgesehen ist, und wenigstens einer der beiden Lagerteile zumindest einen Schmiermittelkanal (12) mit Kapillarwirkung umfaßt,
dadurch gekennzeichnet, daß der Schmiermittelkanal einen größeren Querschnitt hat als zur Erzielung einer Kapillarwirkung zulässig und daß in dem Schmiermittel ein vom Schmiermittel benetzbarer Körper angeordnet ist, der sich zumindest über einen Teil der Länge des Schmiermittelkanals erstreckt und der den freien Querschnitt im Schmiermittelkanal soweit verringert, daß sich eine Kapillarwirkung ergibt.

2. Drehanoden-Röntgenröhre nach Anspruch 1,
dadurch gekennzeichnet, daß in dem Schmiermittelkanal ein Draht angeordnet ist, dessen Außenquerschnitt kleiner ist als der Innenquerschnitt des Schmiermittelkanals.

3. Drehanoden-Röntgenröhre nach Anspruch 2,
dadurch gekennzeichnet, daß der Draht an einer Stelle - vorzugsweise am Ende - so geformt ist, daß er im Schmiermittelkanal klemmt.

4. Drehanoden-Röntgenröhre nach Anspruch 1,
dadurch gekennzeichnet, daß in dem Schmiermittelkanal ein offenporiger Körper angeordnet ist.

## Claims

1. A rotary-anode X-ray tube comprising a sleeve bearing, notably a helical-groove bearing, which serves to journal the rotary anode and comprises a stationary (8) and a rotatable bearing portion (9), a liquid lubricant being present between the two bearing portions and at least one of the two bearing portions comprising at least one capillary-type lubricant duct (12), characterized in that the lubricant duct has a cross-section which is greater than permitted so as to achieve a capillary effect and that in the lubricant there is arranged a member which can be wetted by the lubricant and extends at least over a part of the length of the lubricant duct and reduces the free cross-section in the lubricant duct to such an extent that a capillary effect is obtained.

2. A rotary-anode X-ray tube as claimed in Claim 1, characterized in that in the lubricant duct there is arranged a wire whose outer diameter is smaller than the inner diameter of the lubricant duct.

3. A rotary-anode X-ray tube as claimed in Claim 2, characterized in that in one location, preferably at the end, the wire is shaped so that it is clamped in the lubricant duct.

4. A rotary-anode X-ray tube as claimed in Claim 1, characterized in that an open-pore member is arranged in the lubricant duct.

## Revendications

1. Tube à rayons X à anode tournante avec un palier à glissement, en particulier un palier à rainures hélicoïdales pour le logement de l'anode tournante qui comprend une partie de palier fixe (8) et une partie de palier tournante (9), un lubrifiant liquide étant prévu entre les deux parties de palier et au moins une des deux parties de palier comprenant au moins un canal de lubrifiant (12) à action capillaire,
caractérisé en ce que le canal de lubrifiant possède une section plus grande que ne l'autorise la réalisation d'une action capillaire et en ce qu'un corps mouillable par le lubrifiant est disposé dans le lubrifiant et s'étend sur au moins une partie de la longueur du canal de lubrifiant et réduit ainsi la section libre dans le canal de lubrifiant afin d'obtenir une action capillaire.

2. Tube à rayons X à anode tournante selon la revendication 1, caractérisé en ce qu'un fil dont la section externe est inférieure à la section interne du canal de lubrifiant est disposé dans le canal de lubrifiant.

3. Tube à rayons X à anode tournante selon la revendication 2, caractérisé en ce que le fil est formé à un endroit - de préférence à son extrémité - de telle sorte qu'il soit coincé dans le canal de lubrifiant.

4. Tube à rayons X à anode tournante selon la revendication 1, caractérisé en ce qu'un corps à pores ouverts est disposé dans le canal de lubrifiant.
